# EUROPÄISCHE PATENTSCHRIFT

(11) **EP 0 937 381 B1**
(45) Veröffentlichungstag und Bekanntmachung des Hinweises auf die Patenterteilung: **29.05.2002**
(21) Anmeldenummer: 99100869.9
(22) Anmeldetag: 19.01.1999
(51) Int. Cl.: A01D 57/04

(54) **Erntegutbergungsvorsatz**
Crop harvesting header
Dispositif de ramassage pour récolteuse

(30) Priorität: 11.02.1998 DE 19805399
(43) Veröffentlichungstag der Anmeldung: 25.08.1999
(73) Patentinhaber: DEERE & COMPANY, Moline, Illinois 61265-8098 (US)
(72) Erfinder: Emmert, Walter, 66497 Contwig (DE)
(74) Vertreter: Magin, Ludwig Bernhard

(56) Entgegenhaltungen:
- EP-A- 0 250 650
- DE-U- 9 214 178
- FR-A- 2 327 720
- US-A- 2 815 048
- US-A- 4 426 829
- US-A- 5 768 870

## Beschreibung

Die Erfindung bezieht sich auf einen Erntegutbergungsvorsatz für eine landwirtschaftliche Erntemaschine, vorzugsweise einen Mähdrescher, mit einem Rahmen und einer Erntegutleitvorrichtung, die auf wenigstens einer teleskopisch ausgebildeten Tragvorrichtung befestigbar und mittels Fremdkraft verstellbar ist.

Erntegutbergungsvorsätze werden an landwirtschaftlichen Erntemaschinen, vorzugsweise an Mähdreschern, eingesetzt. Sie beinhalten eine Erntegutleitvorrichtung, üblicherweise in Form einer Haspel, die an Tragarmen angebracht ist. Um den Erntevorsatz an verschiedene Erntebedingungen anpassen zu können oder aber um die Erntemaschine für den Transport zu verkürzen, können die Tragarme teleskopisch verstellbar vorgesehen sein.

Die DE-OS-26 46 730 zeigt eine Erntegutaufnahmevorrichtung mit einer Erntegutaufnahmeplattform, einer Haspel und zwei die Haspel tragenden Armen. Jedem Ende der Haspel ist ein Tragarm zugeordnet, wobei die Haspel auf der Erntegutaufnahmeplattform mit Hilfe der Tragarme schwenkbar gelagert ist. Die Tragarme erstrecken sich in bezug auf die normale Vorwärtsbewegung der Vorrichtung nach vorn. Die Tragarme sind längenverstellbar, damit sich die Haspel gegenüber der Plattform nach vorn und hinten verstellen läßt, und beinhalten eine Kolben- und Zylinderanordnung. Durch das Gewicht der Haspel entstehende Biegekräfte wirken dabei direkt auf die Kolben- und Zylinderanordnung. Daher sind in der Kolben- und Zylinderanordnung Lastaufnahmestege vorgesehen, die längs der Achse der Kolben- und Zylinderanordnung durch einen Abstand getrennt sind, um diese Biegekräfte aufzunehmen. Dieser Aufbau der Kolben- und Zylinderanordnung ist aufwendig, unterliegt starken Belastungen und ist störanfällig, vor allem auch, da Hydraulikleitungen der Kolben- und Zylinderanordnung ungeschützt angebracht sind und dadurch Beschädigungen durch sich festsetzendes Erntegut und durch Verschmutzungen auftreten können.

Die DE-U-92 14 178 zeigt eine Einstellvorrichtung für die Haspel an einem Mähdrescher mit zwei höheneinstellbaren Haspelarmen. Die Haspelarme tragen die Haspel mittels Verschiebeführungen, die Druckmittelzylinder aufweisen. Im Ernteeinsatz sind die Druckmittelzylinder ausgefahren und die Haspel kann sich in und entgegen der Mähdrescher-Fahrtrichtung auf einem durch Anschläge begrenzten Weg verschieben. Zum Transport kann die Haspel durch die Druckmittelzylinder komplett eingefahren werden. Die Druckmittelzylinder sind offen neben den Haspelarmen angeordnet.

Das mit der Erfindung zu lösende Problem wird darin gesehen, daß die Hydraulikmotoren bekannter verstellbarer Erntegutbergungsvorsätze hohen Belastungen ausgesetzt sind und daß sich durch die bekannte Verlegung von Hydraulikmotoren und Leitungen Stroh und Verschmutzungen an diesen Teilen festsetzen und zu Beschädigungen und Fehlfunktionen führen können.

Dieses Problem wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Ein Erntegutbergungsvorsatz für eine landwirtschaftliche Erntemaschine beinhaltet einen Rahmen und eine Erntegutleitvorrichtung, die auf wenigstens einer teleskopisch ausgebildeten Tragvorrichtung befestigbar und mittels Fremdkraft verstellbar ist. Die Tragvorrichtung weist wenigstens einen ersten und einen weiteren verschiebbaren Teleskopteil auf. In der Tragvorrichtung sind in einem durch die Teleskopteile gebildeten Innenraum Betätigungsmittel vorgesehen, die einenends an dem ersten Teleskopteil und andernends an dem weiteren Teleskopteil angeschlossen sind. Durch diese Art der Anordnung sind die Betätigungsmittel vor Verschmutzung und Beschädigungen geschützt. Die Betätigungsmittel werden darüber hinaus nicht durch das Gewicht der Erntegutleitvorichtung belastet, da dieses durch die Teleskopteile der Tragvorrichtung aufgenommen wird. Ein erfindungsgemäßer Erntegutbergungsvorsatz kann an einem Mähdrescher eingesetzt werden, es ist aber auch ein Einsatz an einem Feldhäcksler, einer Mähmaschine, einem Mähaufbereiter, an einer Ballenpresse, an einem Ladewagen oder an einer anderen Erntemaschine denkbar. Unter einem Erntegutbergungsvorsatz kann unter anderem ein Mähtisch mit einer Erntegutleitvorrichtung, beispielsweise in Form einer Haspel, verstanden werden, der an einem Mähdrescher, an einem Feldhäcksler oder an einer anderen Erntemaschine eingesetzt werden kann. Ebenso ist eine Ausführung als Pick-up vorstellbar, die beispielsweise an einem Feldhäcksler, an einer Ballenpresse oder an einem Ladewagen angebracht ist und bei der die Erntegutleitvorrichtung beispielsweise als Aufnahmetrommel oder aber auch als Niederhalter der Pick-up ausgeführt ist.

Einer der Teleskopteile ist als Führung in Form eines zumindest teilweise geschlossenen Hohlprofils ausgebildet. In dessen innerem Hohlraum sind zumindest ein weiterer Teleskopteil, der als offenes oder als geschlossenes Profil ausgebildet sein kann, wie auch die Betätigungsmittel angeordnet. Die Betätigungsmittel können dabei im Inneren des zweiten Teleskopteils oder auch außerhalb bzw. neben dem weiteren Teleskopteil im Inneren des ersten Teleskopteils angeordnet sein. Unter einem geschlossenen Hohlprofil kann beispielsweise ein Rohr, ein Vierkant-Profil oder ein anderes Profil mit beliebigen Kanten oder Krümmungen verstanden werden. Das offene oder geschlossene Hohlprofil ist so auszuführen, daß es mit den Wandungen des geschlossenen Profils zusammenwirken kann, so daß eine Führung des weiteren Teleskopteils durch den ersten Teleskopteil erfolgt.

Der erste Teleskopteil ist als Vierkant-Profil und der weitere Teleskopteil als U-Profil oder als Vierkantprofil ausgebildet, wobei der weitere Teleskopteil als Gleitstück im inneren Hohlraum des ersten Teleskopteils verschiebbar ist. Der weitere Teleskopteil stützt sich dabei mit seiner äußeren Wandung an der inneren Wandung des ersten Teleskopteils ab. Dies sind besonders günstige Kombinationen von Profilen, da sowohl ein Vierkant-Profil als auch ein U-Profil handelsübliche Elemente sind und sich darüber hinaus eine günstige Führung im Vierkant-Profil ergibt.

Zumindest ein Abschnitt der als geschlossene Profile ausgebildeten Teleskopteile ist lösbar mit dem übrigen Profil verbunden, so daß dieser Abschnitt zur Wartung der innenliegenden Betätigungsmittel geöffnet werden kann. Dieser Abschnitt kann einer Seitenwandung des ersten Teleskopteils entsprechen oder aber auch nur durch ein Teilstück dieser Seitenwandung gebildet werden.

Die Betätigungsmittel werden als Linearantriebe, beispielsweise als Hydraulikmotoren, ausgeführt, die einenends mit ihrem Zylinder an dem ersten Teleskopteil und andernends vorzugsweise mit ihrem Kolben an dem weiteren Teleskopteil angeschlossen sind. Es ist darüber hinaus aber auch denkbar, die Betätigungsmittel als Elektromotor mit Spindel-, Zahnstangenoder Kettengetriebe oder aber als pneumatische Vorrichtung vorzusehen. Die Hydraulikmotoren können als doppeltwirkende Kolben-Zylinder-Anordnungen ausgeführt werden. Es ist aber auch möglich, einfach wirkende Kolben-Zylinder-Anordnungen vorzusehen, wobei die Rückbewegung des Kolbens beispielsweise durch die Wirkung einer Feder erfolgen kann.

Die Erntegutleitvorrichtung wird an dem ersten Teleskopteil angeschlossen. Der weitere Teleskopteil kann am Rahmen der Erntemaschine oder umgekehrt angeschlossen werden.

Um den Erntegutbergungsvorsatz an wechselnde Ernteverhältnisse anzupassen oder aber um ihn für die Straßenfahrt vorzubereiten, ist die Tragvorrichtung an dem Rahmen höhenverstellbar angeschlossen. Hierzu können Hydraulikmotoren vorgesehen werden, die die am Rahmen angeschlossenen Tragarme verschwenken.

An dem Erntegutbergungsvorsatz sind Seitenwände vorgesehen, die diesen zu den Seiten begrenzen. Der erste Teleskopteil wird zu den Seiten durch Seitenwandungen begrenzt, von denen mindestens eine die Seitenwände des Erntegutbergungsvorsatzes überlappt. Diese überlappenden Seitenwandungen können direkt am Profil vorgesehen sein oder durch eine Seitenfläche des Profils, das mit einem weiteren Bauteil, wie beispielsweise einem Blech, verbunden ist, gebildet werden. Wenn beide Seitenwandungen die Seitenwand überlappen, so verläuft die Seitenwand des Erntegutbergungsvorsatzes in einem Bereich zwischen den beiden Seitenwandungen. Durch diese Anordnung werden Hydraulikmotoren, Hydraulikleitungen und andere Bauteile, die sich bisher offen an dem Erntegutbergungsvorsatz befanden, vor Einflüssen von außen geschützt. Die Überlappung kann über die ganze Länge des ersten Teleskopteils oder auch der Tragarme erfolgen oder aber auch nur in bestimmten Teilbereichen vorgesehen werden. Die Seitenwandungen können bei einer vertikalen Verstellung der Tragarme mitbewegt werden, so daß bei ausreichender Abmessung der Seitenwandung oder - wandungen, die dahinter liegenden Hydraulikmotoren etc. auch bei einer extremen Steilstellung der Tragarme, z.B. bei der Ernte von Sonnenblumen, durch die Seitenwandungen geschützt werden.

Zwischen dem ersten und dem weiteren Teleskopteil können Gleitmittel vorgesehen werden, um die beim Verschieben auftretenden Reibungskräfte zwischen dem weiteren Teleskopteil und dem ersten Teleskopteil zu verringern. Hierzu können beispielsweise Gleitsteine oder Gleitschienen aus Kunststoff oder einem anderen Material, vorgesehen werden. Es ist aber auch denkbar, die innere Wandung des ersten Teleskopteils, die äußere Wandung des weiteren Teleskopteils oder beide Wandungen zu beschichten. Es kann aber auch ein einfaches Schmieren der Wandungen mit handelsüblichen Schmiermitteln vorgesehen werden.

Anhand der Zeichnung, die zwei Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine Seitenansicht einer Erntemaschine mit einem erfindungsgemäßen Erntegutbergungsvorsatz,
- Fig. 2: eine vergrößerte Darstellung eines solchen Erntegutbergungsvorsatzes,
- Fig. 3: einen Schnitt durch einen Tragarm des Erntegutbergungsvorsatzes entlang der Linie A-A und in Blickrichtung der dazugehörigen Pfeile und
- Fig. 4: einen anderen Schnitt durch einen alternativ ausgeführten Tragarm des Erntebergungsvorsatzes entlang der Linie A-A und in Blickrichtung der dazugehörigen Pfeile.

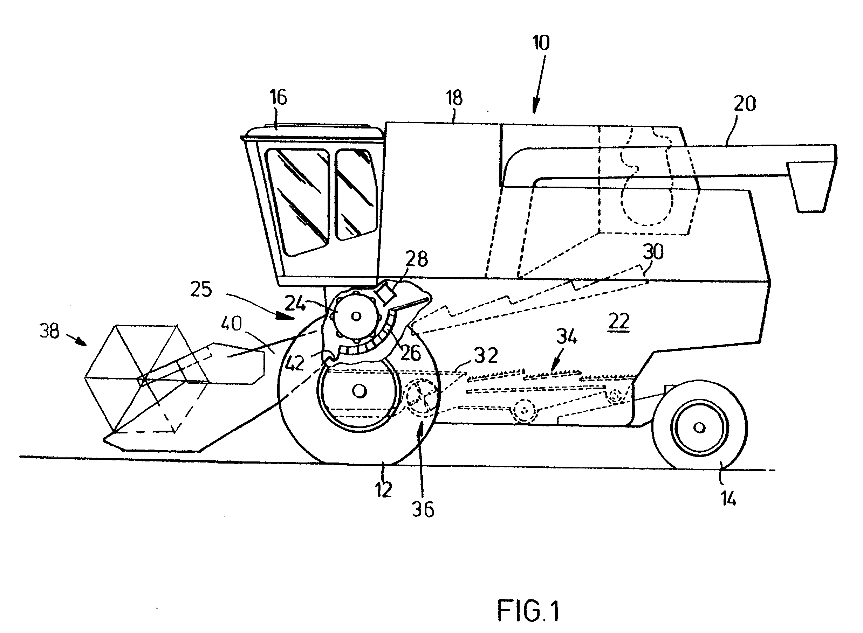

Eine in Figur 1 gezeigte Erntemaschine 10 in der Form eines Mähdreschers ist auf vorderen angetriebenen und rückwärtigen lenkbaren Rädern 12 bzw. 14 getragen und weist eine Fahrerkabine 16 auf, von der aus sie von einem Fahrer bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24 und einen Dreschkorb 26, die gemeinsam eine Dreschvorrichtung 25 bilden, und eine Gutbearbeitungsvorrichtung 28 in seine großen und kleinen Bestandteile zerlegt wird. Auf daran anschließenden Schüttlern 30 sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird. Anstelle von Schüttlern 30 ist auch der Einsatz eines oder mehrerer Axialabscheider möglich. Auf dem Boden liegendes oder stehendes Gut wird von einem erfindungsgemäßen Erntegutbergungsvorsatz 38 vom Boden aufgenommen und wird über einen Schrägförderer 40 und eine Steinfangmulde 42 der Dreschtrommel 24 zugeführt.

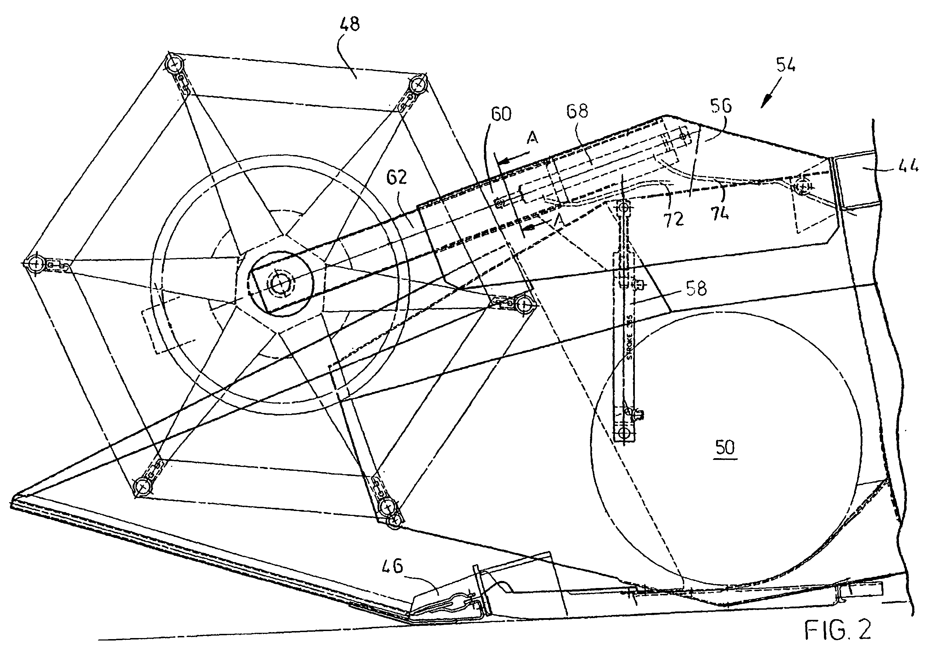

Der Erntegutbergungsvorsatz 38 beinhaltet, wie in Figur 2 dargestellt, unter anderem einen Rahmen 44, einen Messerbalken 46, eine Fördertrommmel 50 und eine Erntegutleitvorrichtung 48 in Form einer Haspel. An den Seiten wird der Erntegutbergungsvorsatz 38 durch Seitenwände 51 begrenzt. Die Erntegutleitvorrichtung 48 leitet das Erntegut in Richtung des Messerbalkens 46, durch den es abgeschnitten wird. Die Fördertrommel 50 führt das Erntegut mittels zweier schneckenförmiger Abschnitte zur Mitte der Erntemaschine, von wo es auf den nachfolgenden Schrägförderer 40 gefördert wird.

Die Erntegutleitvorrichtung 48 ist auf einer Tragvorrichtung 54 angebracht, die zwei teleskopisch ausgebildeten Tragarmen 56 aufweist, zwischen und auf denen einenends die Erntegutleitvorrichtung 48 drehbar gelagert ist. Andernends sind die Tragarme 56 gelenkig mit dem Rahmen 44 des Erntegutbergungsvorsatzes 38 verbunden. Die Tragarme 56 können mittels zweier Hydraulikmotoren 58, die einenends am Rahmen 44 des Erntegutbergungsvorsatzes 38 und andernends an den Tragarmen 56 angeschlossen sind, in ihrer vertikalen Lage verstellt werden, um die Erntegutleitvorrichtung 48 an unterschiedliche Erntebedingungen, wie beispielsweise eine unterschiedliche Höhe des Erntegutes anzupassen.

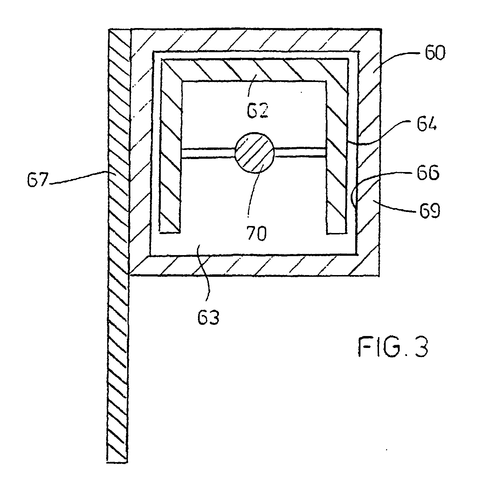

Die Tragarme 56 bestehen aus einem ersten Teleskopteil 60, 160 und einem weiteren Teleskopteil 62, 162. Wie in Figur 3 in einem ersten Ausführungsbeispiel gezeigt, ist der erste Teleskopteil 60 in Form eines geschlossenen Vierkant-Profils und der weitere Teleskopteil 62 in Form eines U-Profils ausgebildet. Der weitere Teleskopteil 62 ist im Inneren 63 des ersten Teleskopteils 60 verschiebbar angeordnet. Die äußere Wandung 64 des weiteren Teleskopteils 62 stützt sich an der inneren Wandung 66 des ersten Teleskopteils 60.

Der erste Teleskopteil weist Seitenwandungen 67, 69 auf, von denen die zur Außenseite der Erntemaschine 10 gewandte Seitenwandung 67 so ausgebildet ist, daß sie die Seitenwand 51 des Erntegutbergungsvorsatzes 38 überlappt. Bei einer vertikalen Verstellung der Tragarme 56 wird auch die Seitenwandung 67 mitverstellt. Die Seitenwandung 67 ist so groß ausgebildet, daß auch bei einer extremen Steilstellung der Tragarme 56 eine Überlappung zwischen der Seitenwandung 67 und der Seitenwand 51 gewährleistet ist.

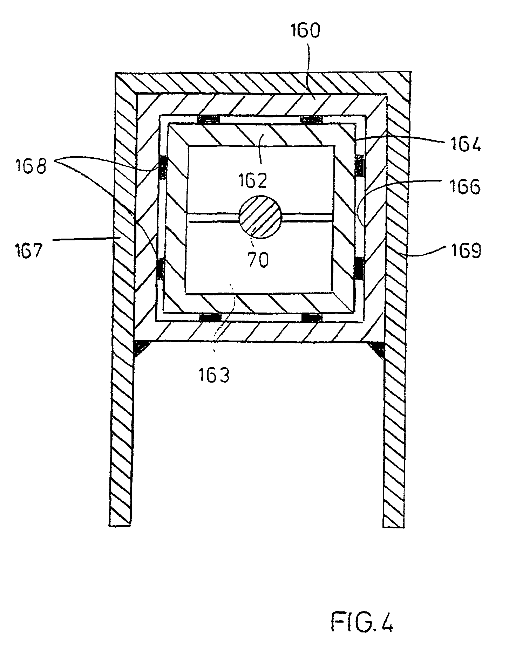

Entsprechend Fig. 4, die einen alternativen Aufbau des Tragarms 56 zeigt, werden in einem zweiten Ausführungsbeispiel sowohl der erste Teleskopteil 160 als auch der weitere Teleskopteil 162 durch ein geschlossenens Vierkant-Profil gebildet. Der weitere Teleskopteil 162 ist im Inneren 163 des ersten Teleskopteils 160 verschiebbar angeordnet. Zwischen der äußeren Wandung 164 des weiteren Teleskopteils 162 und der inneren Wandung 166 des ersten Teleskopteils 160 sind Gleitmittel 168 angebracht. Diese Gleitmittel 168 können beispielsweise als Gleitsteine oder Gleitschienen aus PVC oder einem anderen Material bestehen, das die Gleiteigenschaften des weiteren Teleskopteils 162 im ersten Teleskopteil 160 begünstigt.

Der erste Teleskopteil 160 weist in diesem zweiten Ausführungsbeispiel zwei Seitenwandungen 167, 169 auf, die beide die Seitenwand 51 des Erntebergungsvorsatzes 10 überlappen, so daß sich die Seitenwand 51 in einem Bereich zwischen den Seitenwandungen 167, 169 befindet bzw. bei einer vertikalen Verstellung der Tragarme 56 bewegt. Die Seitenwandungen 167 und 169 sind entsprechend der Seitenwandung 67 in Fig. 3 ausgebildet.

Im Inneren 63, 163 des ersten Teleskopteils 60, 160 ist ein als doppelt wirkender Hydraulikmotor ausgebildetes Betätigungsmittel 68 vorgesehen. Dieses Betätigungsmittel 68 ist einenends mit seinem Zylinder 70 mit dem ersten Teleskopteil 60, 160 und andernends mit seinem Kolben 71 mit dem weiteren Teleskopteil 62, 162 verbunden. Das Betätigungsmittel 68 ist mit Hydraulikleitungen 72, 74 verbunden, die mit einer an der Erntemaschine 10 angebrachten Druckquelle verbunden sind. Durch die Hydraulikleitungen 72, 74 kann das Betätigungsmittel 68 mit Druck beaufschlagt werden.

Wird das als Hydraulikmotor ausgebildete Betätigungsmittel 68 so mit Druck beaufschlagt, daß der Kolben 71 ausfährt, wird der zweite Teleskopteil 62, 162 durch die Wirkung des Kolbens 71 im Innern 63, 163 des ersten Teleskopteils 60, 160 verschoben. Die an dem weiteren Teleskopteil 62, 162 angebrachte Erntegutleitvorrichtung 48 wird dadurch bezogen auf die Vorwärts-Fahrtrichtung der Erntemaschine 10 nach vorne bewegt.

Um die Erntegutleitvorrichtung 48 beispielsweise zum Transport in eine möglichst zurückgezogene Position zu bringen, wird das Betätigungsmittel 68 so mit Druck beaufschlagt, daß der Kolben 71 einfährt und damit den weiteren Teleskopteil 62, 162 in das Innere 63, 163 des ersten Teleskopteils 60, 160 zieht.

Es ist abweichend von den beschriebenen Ausführungsbeispielen auch denkbar, daß die Teleskopteile 60, 160, 62, 162 aus anderen Profilen gebildet werden, denen aber gemeinsam ist, daß sie zusammen einen Hohlraum einschließen, in dem das Betätigungsmittel 68 geschützt angeordnet wird. Es ist weiter möglich, die zur Außenseite der Erntemaschine 10 zeigende Seitenwandung 67, 167 des ersten Teleskopteils 60, 160 abnehmbar auszuführen. Das hat den Vorteil, daß die im Inneren 63, 163 der Teleskopteile 60, 160, 62, 162 liegenden Betätigungsmittel 68 zu Wartungs- oder Reparaturzwecken zugänglich gemacht werden.

Darüber hinaus ist es denkbar, die Betätigungsmittel 68 nicht als Hydraulikmotor zu konzipieren, sondern statt dessen einen anderen Linearantrieb wie einen Elektromotor mit Spindel-, Zahnstangen- oder Kettengetriebe oder pneumatische Betätigungsmittel vorzusehen.

Zwischen dem ersten Teleskopteil 60, 160 und dem weiteren Teleskopteil 62, 162 oder aber auch vor und nach dem ersten und dem weiteren Teleskopteil 60, 160, 62, 162 können darüber hinaus zusätzliche Teleskopteile vorgesehen sein, die durch die Betätigungsmittel 68 oder durch weitere Betätigungsmittel verschiebbar sein können.

## Patentansprüche

1. Erntegutbergungsvorsatz (38) für eine landwirtschaftliche Erntemaschine (10), vorzugsweise einen Mähdrescher, mit einem Rahmen (44) und einer Erntegutleitvorrichtung (48), die auf wenigstens einer teleskopisch ausgebildeten Tragvorrichtung (54) befestigbar und mittels Fremdkraft verstellbar ist, **dadurch gekennzeichnet, daß** die Tragvorrichtung (54) wenigstens einen ersten Teleskopteil (60, 160) und einen weiteren verschiebbaren Teleskopteil (62, 162) aufweist und daß in der Tragvorrichtung (54) in einem durch die Teleskopteile (60, 160, 62, 162) gebildeten Innenraum Betätigungsmittel (68) vorgesehen sind, die einenends an dem ersten Teleskopteil (60, 160) und andernends an dem weiteren Teleskopteil (62, 162) angeschlossen sind.

2. Erntegutbergungsvorsatz nach Anspruch 1, **dadurch gekennzeichnet, daß** zumindest einer der Teleskopteile (60, 160, 62, 162) als Führung in Form eines zumindest teilweise geschlossenen Hohlprofils ausgebildet ist, in dessen innerem Hohlraum (63, 163) zumindest ein weiterer Teleskopteil (62, 162), der als offenes oder geschlossenes Profil ausgebildet sein kann, wie auch die Betätigungsmittel (70) angeordnet sind.

3. Erntegutbergungsvorsatz nach Anspruch 2, **dadurch gekennzeichnet, daß** der erste Teleskopteil (60, 160) als Vierkant-Profil und der weitere Teleskopteil (62, 162) als U-Profil oder als Vierkant-Profil ausgebildet ist und daß der weitere Teleskopteil (62, 162) als Gleitstück im inneren Hohlraum (63, 163) des ersten Teleskopteils (60, 160) verschiebbar ist.

4. Erntegutbergungsvorsatz nach Anspruch 2 oder 3, **dadurch gekennzeichnet, daß** zumindest ein Abschnitt der als geschlossene Profile ausgebildeten Teleskopteile (60, 160, 162) lösbar mit dem übrigen Profil verbunden ist.

5. Erntegutbergungsvorsatz nach einem der Ansprüche 1 bis 4, **dadurch gekennzeichnet, daß** die Betätigungsmittel (68) in Form von Linearantrieben wie Hydraulikmotoren oder Elektromotoren ausgebildet sind.

6. Erntegutbergungsvorsatz nach einem der Ansprüche 1 bis 5, **dadurch gekennzeichnet, daß** die Erntegutleitvorrichtung (52) an dem ersten Teleskopteil (60, 160) und/oder daß der weitere Teleskopteil (62, 162) am Rahmen (44) angeschlossen ist.

7. Erntegutbergungsvorsatz nach einem der Ansprüche 1 bis 6, **dadurch gekennzeichnet, daß** die Tragvorrichtung (54) an dem Rahmen (44) höhenverstellbar angeschlossen ist.

8. Erntegutbergungsvorsatz nach Anspruch 6, **dadurch gekennzeichnet, daß** zumindest eine mit dem ersten Teleskopteil (60, 160) verbundene Seitenwandung (67, 167, 69, 169) eine den Erntegutbergungsvorsatz (38) zu den Seiten begrenzende Seitenwand (51) zumindest teilweise überlappt.

9. Erntegutbergungsvorsatz nach einem der Ansprüche 1 bis 8, **dadurch gekennzeichnet, daß** zwischen dem ersten Teleskopteil (60, 160) und dem weiteren Teleskopteil (62, 162) Gleitmittel (168) vorgesehen sind.

## Claims

1. A crop harvesting header (38) for an agricultural harvesting machine (10), preferably a combine harvester, with a frame (44) and crop guide device (48), which can be fixed on at least one telescopically formed support device (54) and be adjusted by an external force, **characterized in that** the support device (54) comprises at least one first telescopic part (60, 160) and further movable telescopic part (62, 162) and **in that** actuating means (68) are provided in the support device (54) in an inner space formed by the telescopic parts (60, 160, 62, 162) and are connected at one end to the first telescopic part (60, 160) and at the other end to the further telescopic part (62, 162).

2. A crop harvesting header according to claim 1, **characterized in that** at least one of the telescopic parts (60, 160, 62, 162) is formed as a guide in the form of an at least partially closed hollow profile, in whose inner hollow space (63, 163) at least one further telescopic part (62, 162), which is formed as an open or closed profile, and also the actuating means (70) are disposed.

3. A crop harvesting header according to claim 2, **characterized in that** the first telescopic part (60, 160) has the form of a square profile and the further telescopic part (62, 162) the form of a U-profile or a square profile, and **in that** the further telescopic part (62, 162) can move as a sliding part in the inner hollow space (63, 163) of the first telescopic part (60, 160).

4. A crop harvesting header according to claim 2 or 3, **characterized in that** at least one portion of the telescopic part (60, 160, 162) formed as a closed profile is releasably attached to the rest of the profile.

5. A crop harvesting header according to any of claims 1 to 4, **characterized in that** the actuating means (68) are in the form of linear drives, such as hydraulic motors or electric motors.

6. A crop harvesting header according to any of claims 1 to 5, **characterized in that** the crop guide device (48) is attached to the first telescopic part (60, 160) and/or **in that** the further telescopic part (62, 162) is attached to the frame (44).

7. A crop harvesting header according to any of claims 1 to 6, **characterized in that** the support device (54) is attached to the frame (44) so as to be adjustable in height.

8. A crop harvesting header according to claim 6, **characterized in that** at least one sidewall (67, 167, 69, 169) connected to the first telescopic part (60, 160) at least partially overlaps a sidewall (51) bounding the crop harvesting header (38) at the side.

9. A crop harvesting header according to any of claims 1 to 8, **characterized in that** slide means (168) are provided between the first telescopic part (60, 160) and the further telescopic part (62, 162).

## Revendications

1. Dispositif de ramassage pour récolteuse (38) destiné à une récolteuse (10) agricole, de préférence une moissonneuse-batteuse, comprenant un cadre (44) et un dispositif de guidage de la récolte (48), qui peut être fixé sur au moins un support (54) télescopique et qui peut être commandé par une force extérieure, **caractérisé en ce que** le support (54) comporte au moins une première partie télescopique (60, 160) et une autre partie télescopique (62, 162), susceptible de coulisser, et **en ce que** des moyens de manoeuvre (68) sont prévus dans le support (54) dans un espace intérieur formé par les parties télescopiques (60, 160, 62, 162), lesquels moyens de manoeuvre sont assemblés sur une extrémité avec la première partie télescopique (60, 160) et sur l'autre extrémité avec l'autre partie télescopique (62, 162).

2. Dispositif de ramassage pour récolteuse selon la revendication 1, **caractérisé en ce qu'**au moins l'une des parties télescopiques (60, 160, 62, 162) est conçue sous forme de guidage formé par un profilé creux au moins partiellement fermé, dans la cavité intérieure (63, 163) duquel sont disposés au moins une autre partie télescopique (62, 162), qui peut être conçue sous forme de profilé ouvert ou fermé, ainsi que les organes de manoeuvre (70).

3. Dispositif de ramassage pour récolteuse selon la revendication 2, **caractérisé en ce que** la première partie télescopique (60, 160) est conçue sous forme de profilé à quatre pans et l'autre partie télescopique (62, 162) est conçue sous forme de profilé en U ou de profilé à quatre pans, et **en ce que** l'autre partie télescopique (62, 162), conçue sous forme de pièce coulissante, peut coulisser dans la cavité intérieure (63, 163) de la première partie télescopique (60, 160).

4. Dispositif de ramassage pour récolteuse selon la revendication 2 ou 3, **caractérisé en ce qu'**au moins un tronçon des parties télescopiques (60, 160, 62, 162), conçues sous forme de profilés fermés, est assemblé de manière amovible avec le profilé restant.

5. Dispositif de ramassage pour récolteuse selon une des revendications 1 à 4, **caractérisé en ce que** les organes de manoeuvre (68) sont conçus sous forme de moteurs linéaires, tels que des moteurs hydrauliques ou des moteurs électriques.

6. Dispositif de ramassage pour récolteuse selon une des revendications 1 à 5, **caractérisé en ce que** le dispositif de guidage de la récolte (52) est assemblé contre la première partie télescopique (60, 162) et **en ce que** l'autre partie télescopique (62, 162) est assemblée contre le cadre (44).

7. Dispositif de ramassage pour récolteuse selon une des revendications 1 à 6, **caractérisé en ce que** le support (54) est assemblé de manière réglable en hauteur contre le cadre (44).

8. Dispositif de ramassage pour récolteuse selon la revendication 6, **caractérisé en ce qu'**au moins une paroi latérale (67, 167, 69, 169) assemblée avec la première partie télescopique (60, 160) recouvre au moins en partie une paroi latérale (51) délimitant le dispositif de ramassage pour récolteuse (38) sur les côtés.

9. Dispositif de ramassage pour récolteuse selon une des revendications 1 à 8, **caractérisé en ce que** des moyens coulissants (168) sont prévus entre la première partie télescopique (60, 160) et l'autre partie télescopique (62, 162).
